# EUROPEAN PATENT APPLICATION

(11) **EP 4 538 086 A1**
(43) Date of publication of application: **16.04.2025**
(21) Application number: 24205163.9
(22) Date of filing: 08.10.2024
(51) Int. Cl.: B60K 17/04, F16H 3/50, F16H 63/30

(54) **WHEEL HUB FOR AXLE OF A VEHICLE COMPRISING AN IMPROVED INTEGRATED REDUCTION SYSTEM**

(30) Priority: 12.10.2023 IT 202300021273
(71) Applicant: IVECO S.P.A., 10156 Torino (IT)
(72) Inventor: PEREIRA DE LEMOS, Josè Francivaldo, 10156 TORINO (IT); SANTORO, Francesco, 10156 TORINO (IT)
(74) Representative: Studio Torta S.p.A.

(57) **Abstract**

Wheel hub (10) for an axle (4) of a vehicle (1) comprising a reduction unit (15), which is housed inside a chamber (13) defined between the wheel hub (10) and a housing (5) of the axle (4) and is configured to vary the torque transmitted from an axle shaft (7a, 7b) of the axle (4) to a respective wheel hub (10), the reduction unit (15) comprising a gearing (16), which is configured to define several transmission ratios depending on the position of an actuator system (30) configured to move the axle shaft (7a-7b) along an axis (B) thereof.

## Description

### CROSS-REFERENCE TO RELATED APPLICATIONS

This patent application claims priority from Italian patent application no. 102023000021273 filed on October 12, 2023, the entire disclosure of which is incorporated herein by reference.

### TECHNICAL FIELD

The invention relates to a wheel hub for an axle of a vehicle, in particular a wheel hub for an axle of a heavy vehicle comprising a reduction system integrated in the hub.

### KNOWN STATE OF THE ART

As it is known, in a wheel vehicle provided with at least one internal combustion engine, reducing the torque coming from the drive shaft relative to the axles of the vehicle is essential.

As it is further known, vehicles are normally provided with a differential assembly, which is configured to differentiate the torque coming from the drive shaft between a pair of axle shafts of the axle, due to known reasons of dynamics while driving the vehicle.

The aforementioned torque reduction is normally carried out by means of known gearbox devices located between the drive shaft and the aforesaid differential assembly.

However, in case of heavy vehicles, these reduction gears are insufficient, in terms of number, to be able to provide a suitable reduction ratio between the torque of the drive shaft and the torque delivered to the wheels of the axle in the different load conditions.

Indeed, it is clear that a heavy vehicle, such as a truck, has to bear a significant weight difference between the unloaded condition and the maximum load condition and, hence, the highest gears are not necessarily the most suited ones for the unloaded condition of the vehicle.

To this aim, reduction systems are known, which are integrated in the wheel hubs. However, these systems require further improvements in order to increase their efficiency.

Furthermore, known reduction systems do not allow the gears contained therein to be engaged while the vehicle is running, which means that the vehicle needs to be stopped, with a consequent increase in unproductive times.

The needs discussed above are all the more felt in the case of partially or totally electrified vehicles.

Therefore, there is a strong need for a reduction system for an axle of a vehicle, which can solve the problems discussed above.

The object of the invention is to fulfil the aforementioned needs in an optimized and economic fashion.

### SUMMARY OF THE INVENTION

The aforesaid object is reached by a wheel hub for an axle provided with an integrated reduction system and by a vehicle as claimed in the appended claims, which are an integral part of the description.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- Figure 1 is a schematic cross-section view from the top of a vehicle provided with wheel hubs according to the invention;
- Figure 2 is a schematic cross-section view of an axle provided with wheel hubs according to the different embodiments of the invention;
- Figures 3 and 4 are cross-section views of a vehicle hub comprising a first embodiment of the invention in different operating stages;
- Figures 5 and 6 are cross-section views of a vehicle hub according to a second embodiment of the invention in different operating stages;
- Figures 7 and 8 are cross-section views of a vehicle hub according to a third embodiment of the invention in different operating stages; and

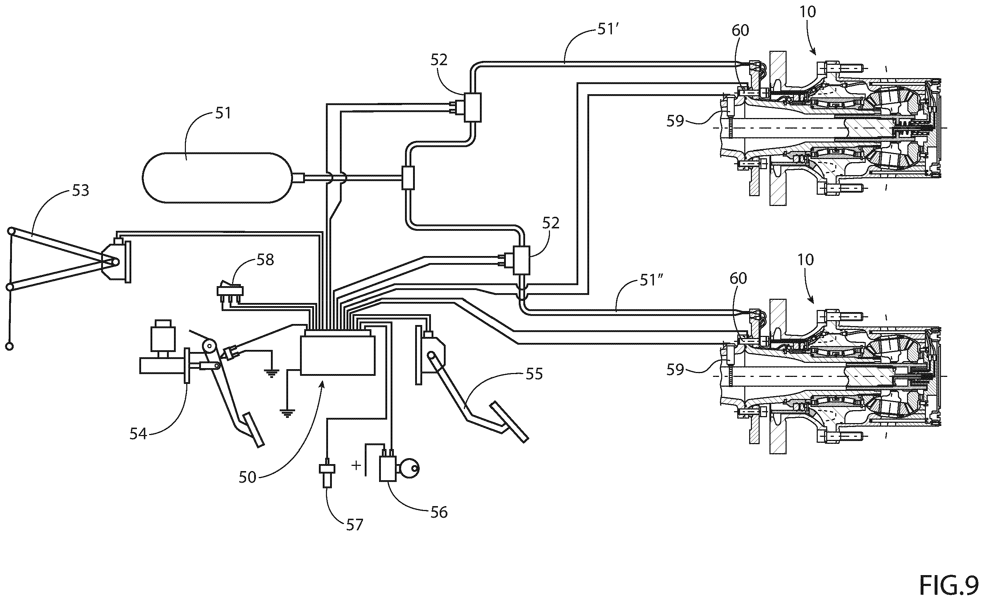

- Figure 9 is a schematic view of a control system for the vehicle hub according to the different embodiments of the invention.

### DETAILED DESCRIPTION OF THE INVENTION

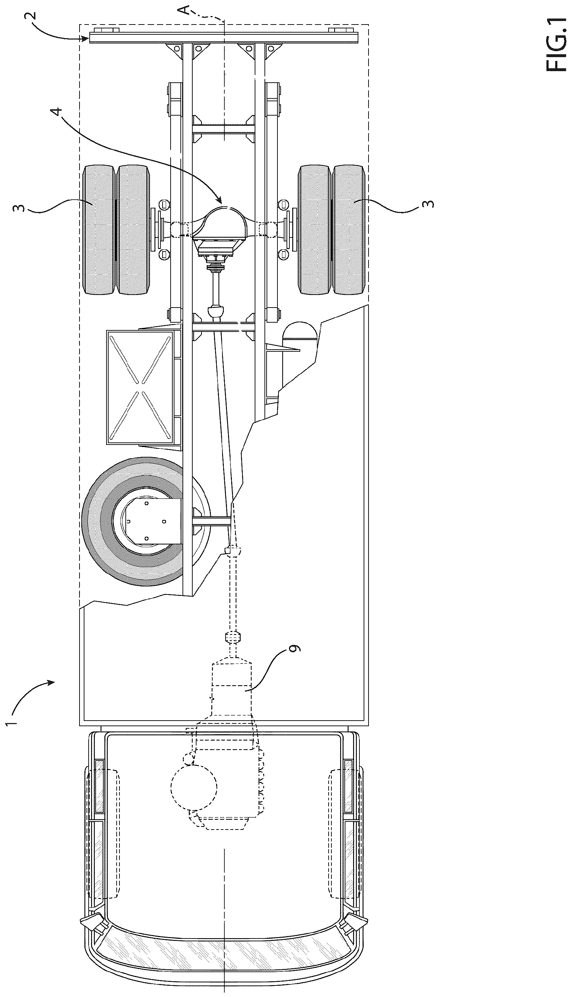

Figure 1 shows a commercial or heavy vehicle 1 comprising a frame 2 extending along a longitudinal axis A and capable of moving by means of wheels 3 carried by an axle 4.

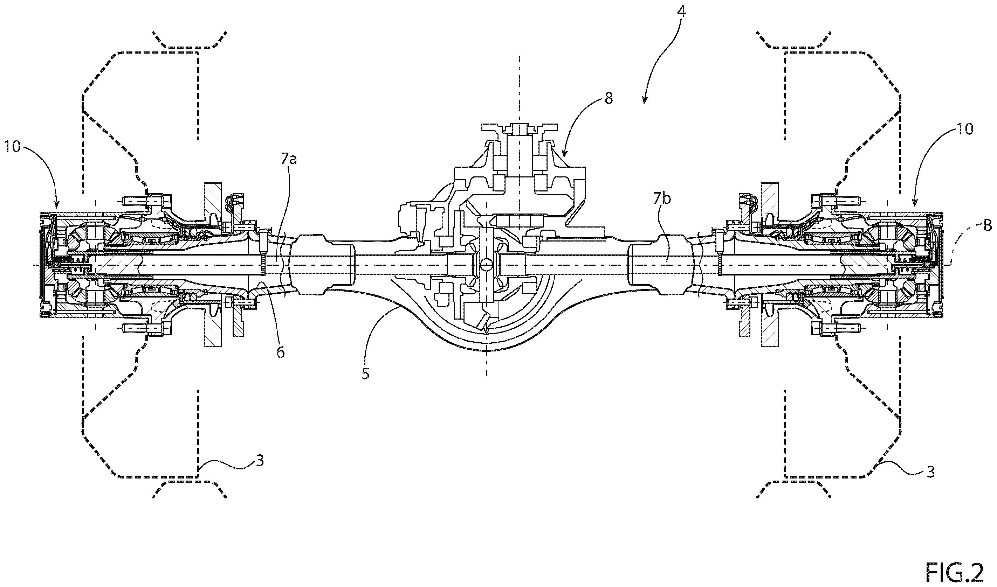

A shown in figure 2, the axle 4 comprises a housing 5 defining a space 6 designed to at least partially accommodate a pair of axle shafts 7a, 7b extending along an B, which is transverse relative to the longitudinal axis A of the vehicle 1.

In particular, the axle shafts 7a, 7b are operatively connected, at an end of theirs, to a transmission 8 of the vehicle 1 and, on the opposite side, to respective wheel hubs 10. In the example shown herein, the transmission 8 shows a bevel gear, but it clearly could be any type of torque transmission device, such as a differential, operatively connected to a torque source 9, such as a powertrain, for example an internal combustion engine.

In particular, the wheel hubs 10 are carried by the housing 5 so that they can freely rotate and are each configured to cooperate with the respective end portion of the axle shafts 7a, 7b, as described more in detail below.

As to the wheel hubs 10, for the sake of simplicity, reference will be made to only one of them, for example the right one, and the items of information provided below also apply - in the same way - to the left wheel hub, the structure described below obviously being mirror-like relative to a longitudinal axis A of the vehicle 1.

The wheel hub 10, as mentioned above, is supported in such a way that it can freely rotate relative to the housing 5, in particular it is hollow and coaxial to the transverse axis B. In the example described herein, the wheel hub 6 is supported by means of support means 11, such as a pair of bevel bearings, and by means of sealing means, such as O-rings.

In particular, the hub 10 comprises a main portion 10a with a substantially cylindrical shape, which is carried by the housing 2, and an annular portion 10b, which is housed at an end portion of the housing 5 and is carried by the main portion 10a.

Advantageously, the main portion 10a and the annular portion 10b are coupled by means of known threaded means and, optionally, with the aid of further intermediate parts, which are not described in detail herein for they depend on the assembly, which is due to the type and weight of the vehicle.

The cylindrical portion 10a defines, together with the end part of the housing 5, a chamber 13, which is axially delimited - along the axis B - by an axial wall 6c of the main portion 10a and, on the other side, by the end part of the housing 5; said chamber 13 is radially delimited, around the axis B, by the inner surface of the main portion 10a of the wheel hub 10.

The wheel hub 10 is operatively connected to the axle 4 by means of a reduction unit 15, which is housed inside the chamber 13 and is configured to connect the wheel hub 10 to the axle shaft 7b with two different transmission ratios, namely so that the speed/torque delivered to the axle shaft 7b is different from the speed/torque delivered to the wheel hub 10 according to two different gear ratios.

In particular, the reduction unit 15 comprises a gearing 16 configured to cooperate with a toothing 37 carried by the axle shaft 7b between a first or a second operating position, characterized so as to define different transmission ratios between the axle shaft 7b and the wheel hub 10, as described below.

In particular, the gearing 16 preferably is a differential gearing comprising a plurality of satellites 17 carried by the wheel hub 10 and a pair of toothed wheels 18, 19 meshing with the satellites 17. Preferably, the gearing 16 comprises four satellites 17 carried by the wheel hub 10 in a cross shape.

More in detail, a first toothed wheel 19 is carried, in an integral manner, by the end of the housing 5, whereas a second toothed wheel 18 is carried, so that it can freely rotate, by the main portion 10a of the hub 10. In particular, said second toothed wheel 18 is supported so as to be axially free to rotate around the axis B on the axial wall 10c of the cylindrical portion 10a.

Each satellite 17 is carried by the wheel hub 10 by means of respective pins 21, around which each satellite can rotate 17, for example by means of a bushing. The pins 21 are fixed to the wheel hub 10 in an integral manner and are fixed in respective openings, for example by means of threaded elements/plugs or any other type of known fixing solution.

Each pin 21 extends along an axis C, which is incident relative to the axis B of the axle 1. Consequently, the toothed wheels 18, 19 mesh with the satellites 17 by means of respective bevel couplings.

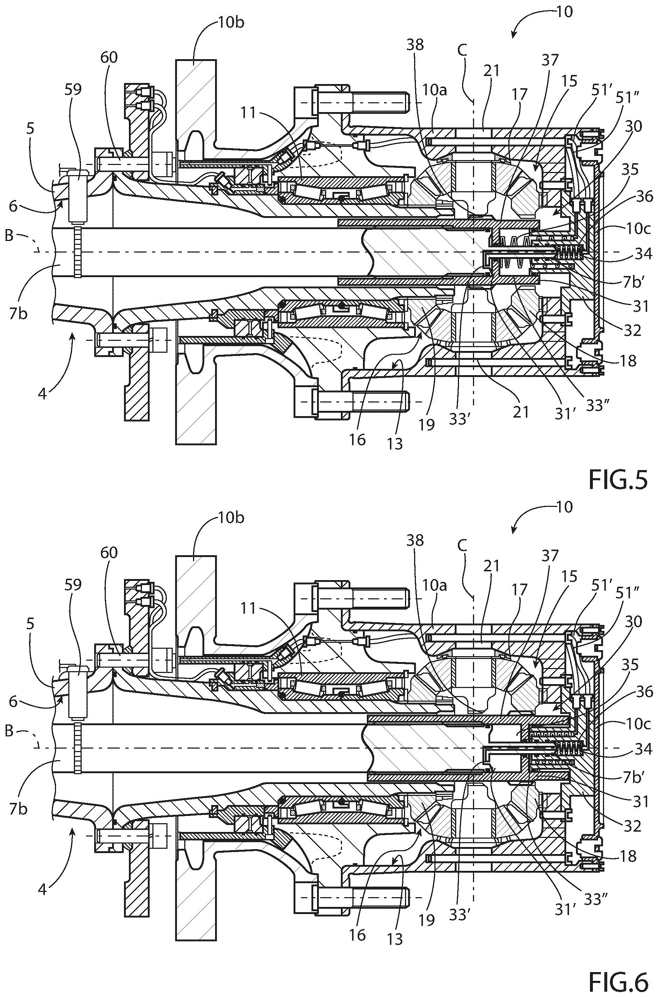

In the embodiment of figures 5 and 6, the axes C of the pins 21 are perpendicular to the longitudinal axis B of the axle 1, so that the dimensions of the toothed wheels 18, 19 are substantially the same.

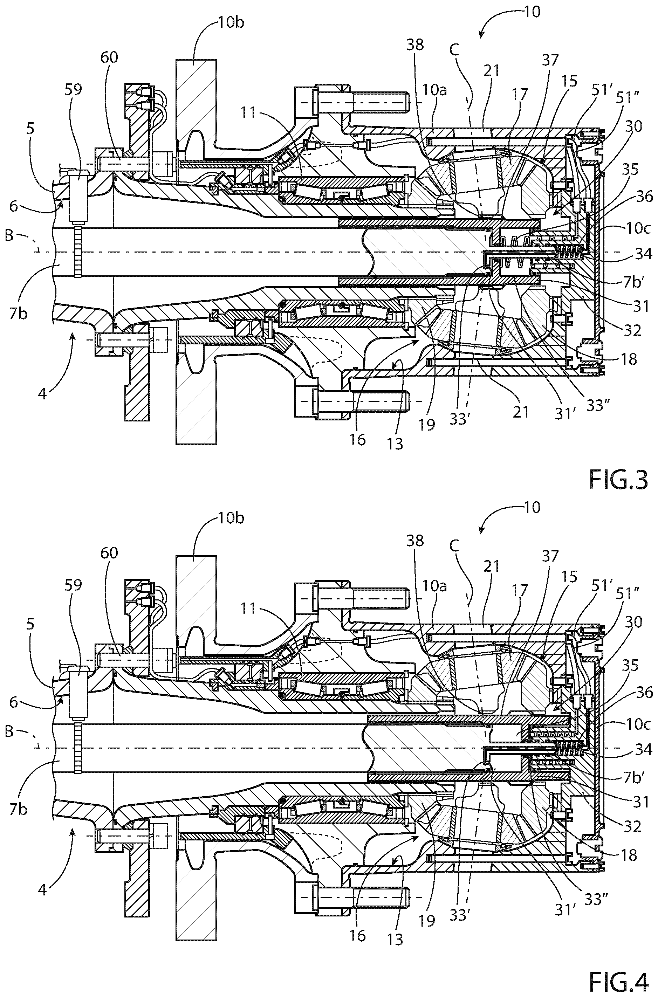

In the embodiment of figures 3 and 4, the axes C of the pins 21 are inclined relative to the longitudinal axis B of the axle 1 by an acute angle facing the axial wall 10c of the wheel hub 10, so that the first toothed wheel 19 has a greater radial extension relative to the axis B than the second toothed wheel 18.

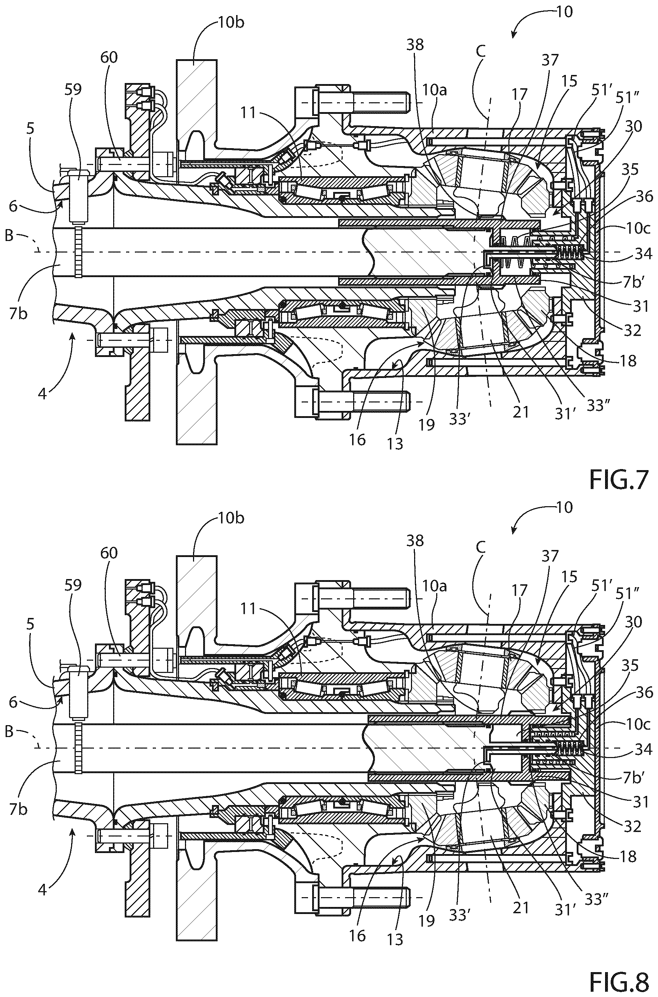

In the embodiment of figures 7 and 8, the axes C of the pins 21 are inclined relative to the longitudinal axis B of the axle 1 by an acute angle facing the housing 5, so that the first toothed wheel 19 has a smaller radial extension relative to the axis B than the second toothed wheel 18.

In particular, the toothing 37 is carried by a sleeve 31, which is movable on the axle shaft 7b so as to cause the toothing 17 to assume a first position, in which it cooperates with a toothing 38 integral to the pins 21, or a second position, in which it cooperates with the second toothed wheel 18.

Advantageously, the sleeve 31 is moved along the axis B so as to move the toothing 37 by means of an actuation system 30 operatively interposed between the wheel hub 10, in particular the axial wall 10c, and the axle shaft 7b.

The sleeve 31 is carried so as to freely translate along the axis B, but linearly integral to the axle shaft 7b, for example by means of a grooved coupling, and cooperates in contact with a support portion 32 fixed to the axial wall 10c of the wheel hub 10.

In particular, the support portion 32 is rigidly carried by the axial wall 10c facing the axle shaft 7b and defines a chamber 34.

Advantageously, the support portion 32 has a cylindrical shape and externally supports the sleeve 31, which is configured to slide on it along the axis B.

The sleeve 31 advantageously has a hollow cylindrical shape, for it is placed around the axle shaft 7b, and comprises a radial septum 31' configured to divide the sleeve 31 into a portion that cooperates with the axle shaft 7b in a sliding manner and a portion that cooperates with the support portion 32 in a sliding manner.

The axle shaft 7b is configured to cooperate in a sliding manner with the aforementioned portion of the sleeve 31 in a fluid-tight fashion, thus defining a first chamber 33' radially delimited by the sleeve 31 and axially delimited, along the axis B, by the radial septum 31' and by the end of the axle shaft 7b.

The sleeve portion 31 cooperates in a sliding manner with the support portion 32 in a fluid-tight fashion, thus defining a second chamber 33" radially delimited by the sleeve 31 and axially delimited, along the axis B, by the radial septum 31' and by the support portion 32.

Advantageously, the actuation system 30 further comprises elastic means 35 operatively interposed between the support portion 32 and the sleeve 31, in particular with respect to the radial septum 31', and therefore housed in the second chamber 33".

In detail, the elastic means 35 cooperate in contact, enabling a relative sliding upon rotation relative to elements with which they are in contact, for example through a bushing or equivalent rotating support elements.

The elastic means 35 advantageously comprise a spiral spring, such as a helical spiral spring, interposed in contact between the axle shaft 7b and the support portion 32, in detail the cylindrical portion thereof.

Said cylindrical portion preferably defines a seat designed to house part of the spiral spring so as to prevent it from buckling.

The actuation system 30 further comprises a third chamber 34 obtained in the support portion 32. The axle shaft 7b comprises a protuberance 7b', for example shaped like a piston as shown herein, configured to slide, in a fluid-tight manner, in the third chamber 34.

The third chamber 34 advantageously houses, on the inside, elastic means 36 configured to provide a force suited to move the protuberance 7b' and, hence, the axle shaft 7b away from the axial wall 10c.

The elastic means 36 advantageously comprise a spiral spring, such as a helical spiral spring, interposed in contact between the protuberance 7b and the support portion 32, in detail an end wall of the third chamber 34.

Advantageously, the third chamber 34 is fluidly connected to the first chamber 33' by means of a duct obtained inside the protuberance 7b' and thus configured to allow pressurized fluid to flow into or out of the first chamber 33'.

In particular, the first chamber 33' is fluidly connected to a first duct 51' and the second chamber 33" is connected to a second duct 51", both capable of being fluidly connected to the source of pressurized fluid.

The first and the second duct 51', 51" allow the fluid source 51 and the chambers 33', 33" to be fluidly connected thanks to a plurality of rotating fluid connection joints not described herein for the sake of brevity, but schematically shown in the attached drawings.

Advantageously, the vehicle 1 further comprises an electronic control unit 50 and a plurality of sensors designed to detect quantities relating to different operating parameters of the vehicle, the control unit 50 comprises processing means electronically connected to the sensors means in order to acquire data detected by them and control, as a result, the passage of pressurized fluid between the first or second chamber 33', 33''.

In particular, the sensors can be connected to the control unit 50 through a wire or in an electromagnetic manner and the control unit 50 is configured to control valve means 52, which are advantageously interposed along the respective ducts 51', 51" and are configured to allow pressurized fluid to flow from source 51 to the chambers 33', 33" or to prevent it from doing so.

Said valve means 52 can be, for example, solenoid valves.

In particular, the electronic unit 50 contains stored data concerning the control of the actuation system 30 and of the valve means 52.

The vehicle 1 can further comprise control means (not shown) configured to change the data stored in the control unit 50 so as to change the actuation condition of the actuation system 30 and of the valve means 52.

The sensor means preferably comprise at least some of the following sensor means:
- A load sensor 53 configured to detect the load of a suspension connecting the axle 4 to the frame 2, for example a load cell;
- A clutch sensor 54 configured to detect the opening of a control clutch of the transmission 8, for example a position sensor connected to the clutch pedal;
- An accelerator sensor 55 configured to detect the acceleration of the vehicle 1, for example a position sensor connected to the accelerator pedal;
- An ignition sensor 56 configured to detect the ignition of the vehicle 1, for example a movement sensor of the key ignition system;
- A speed sensor 57 configured to detect a rotation speed of the output shaft of the powertrain 9, for example a phonic wheel;
- A control sensor 58 configured to detect the activation of the possibility of varying the ratio of the wheel hub, for example a button or an icon on a display;
- A speed sensor 59 configured to detect a rotation speed of the axle 4, hence of the axle shafts 7a, 7b, such as a phonic wheel or an encoder; and
- A speed sensor 60 configured to detect a speed of the wheel hub 10, such as an ABS sensor of the phonic wheel of encoder kind.

The operation of the wheel hub according to the invention described above is the following.

In a first operating condition (figure 4, 6, 8), the pressurized fluid is controlled so as to increase the pressure in the first chamber 33' acting against the thrust of the elastic means 34, which get compressed, pushed by the radial septum 33', which, in turn, is dragged by the sleeve 31. Consequently, the sleeve 31 can move on the axle shaft 7b, moving the radial septum 31' away from the axle shaft 7b and, therefore, the toothing 37 meshes with the first toothed wheel 18, thus moving the satellites 17, which cause the movement of the pins 21 and, hence, of the wheel hub 10.

In a second operating condition (figure 3, 5, 7), the pressurized fluid is controlled so as to increase the pressure in the second chamber 33" acting in parallel to the thrust of the elastic means 34, pushing the radial septum 31', which, in turn, drags the sleeve 31. Consequently, the sleeve 31 can move on the axle shaft 7b, bringing the radial septum 31' closer to the axle shaft 7b until they contact one another and, therefore, the toothing 37 meshes with the toothing 38 integral to the pins 21, thus moving directly them and, therefore, causing the movement of the wheel hub 10.

In the second operating condition, the speed of the wheel hub 10 clearly is higher, for it is the same as the one of axle shaft 7b and, hence, is suited for conditions of lower levels of torque to be transmitted compared to the first operating condition.

In both operating conditions, the elastic means 36 prevent the third chamber 34 from being entirely occupied by the protuberance 7b', thus forbidding the circulation of fluid towards the first chamber 33'.

According to the description above, the invention also relates to a method for controlling a wheel hub 10 provided with a reduction unit 15 of the type described above.

Said method basically comprises the following steps of:
- Detecting a plurality of physical quantities relating to operating parameters of the vehicle 1;
- Processing these detected physical quantities in order to identify a vehicle load condition;
- Checking whether the vehicle load condition complies with the reduction ratio of the wheel hub 10;
- If it complies, said ratio is maintained, otherwise the actuation system is controlled to switch to a different reduction ratio.

In particular, the control of the actuation system 30 comprises sending a control signal to the valve means 52.

In particular, the method described above can be stored and processed in the control unit 50 described above and the detected physical quantities can be some of the quantities detected by the sensor means 53-60.

The check concerning the vehicle load condition can be carried out through a check of the detected quantities relative to physical quantities stored in the control unit 50, for example by means of lookup tables (LUT) deriving from specific experimental tests for the special type of vehicle.

Otherwise, the aforesaid check can be carried out by means of a comparison relative to a value deriving from mathematical interpolation among said physical quantities.

Owing to the above, the advantages of a wheel hub for an axle of a vehicle comprising an integrated reduction system according to the invention are evident.

Thanks to this system, a reduction system is provided, which is integrated in a wheel hub, is versatile, compact and economic as well as easy to be mounted and subjected to maintenance compared to known systems.

Thanks to the additional reduction system and to the two transmission ratios that can be chosen depending on the type and size of the vehicle, fuel consumptions as well as pollutant emissions can be reduced.

In particular, the use of a gearing integrated in the wheel hub allows manufacturers to obtain high transmission ratios through a sturdy gear, which is suited for the large loads of an axle of a heavy vehicle.

In particular, the actuation system disclosed herein is particularly versatile, easy to be subjected to maintenance and replaced.

Furthermore, the presence of two ducts, which selectively inject air into two different chambers, activates the reduction ratio switch in a quicker and more controlled manner. In particular, said switch can be controlled during the movement of the vehicle.

Indeed, thanks to the control method described herein, the switch can take place in the reduction unit 15 when the vehicle is moving.

The control can be automated and stored in the electronic unit and the control variables can previously be stored or can be changed by the driver.

Finally, the wheel hub for an axle of a vehicle comprising an integrated reduction system according to the invention can be subjected to changes and variants, which, though, do not go beyond the scope of protection set forth in the appended claims.

Obviously, as mentioned above, the housing 4 and the wheel hub 10 can have different shapes and consist of more and different pieces.

In addition, the toothed wheels described above could change and there could be elements that are not described herein, but are known when dealing with the assembly of an axle according to the invention.

Clearly, the description above relates to an air actuation, which is deemed to be the most effective and economic one, however the use of equivalent actuator means should not be excluded, said equivalent actuator means being, for example, electromagnetic, mechanical or fluid actuator means, which are configured to move the sleeve 31 instead of the air pressing force described herein.

Furthermore, the method disclosed herein could comprise different ways to check for the condition of engagement of the gears between wheel hub and axle shafts, as mentioned above, through checks of limit values deriving from mathematical interpolations or table relationships.

## Claims

1. Wheel hub (10) for an axle (4) of a vehicle (1) comprising:
- a hollow portion (10a) carried in a rotationally free manner on a housing (5) of said axle (4) around an axis (B) of the latter, said portion (10a) defining a chamber (13) between a its internal wall and said housing (5),
- a reduction unit (15) housed inside said chamber (13) and configured to vary the torque transmitted by a drive axle (7a, 7b) of said axle (4) and said wheel hub (10), said reduction unit ( 15) including a gear train (16),
said gearing (16) including:
a plurality of satellites (17) carried by respective pins (21) integral with said portion (10a);
a first and a second toothed wheel (18, 19), said second toothed wheel (19) being carried integrally fixed to said casing (5), said first toothed wheel (18) being carried rotationally free by said portion (10a);
- an actuation system (30) comprising a sleeve (31) mounted integral with the rotation and free to move along said axis (B) around said semi-axis (7a, 7b), said sleeve (31) including toothing (37),
said toothing (37) being configured to selectively cooperate with said toothing (38) integral with said pins (21) or with said first toothed wheel (18) depending on the position of said sleeve (31) on said long semi-axis (7a, 7b) said axle (B), thus defining different transmission ratios between said drive axle (7a, 7b) and said wheel hub (10).

2. Wheel hub according to claim 1, wherein said pins (2) extend along an axis (C) incident with respect to said axis (B), said axis (C) being perpendicular or inclined by an acute angle facing said housing (5) or inclined at an acute angle opposite to said housing (5).

3. Wheel hub according to one of the previous claims, further comprising a support portion (32) rigidly carried by said portion (10a) and configured to cooperate in a sliding and sealing manner with said sleeve (31), said sleeve (31) comprising a septum portion (31') dividing said sleeve into two portions, a first portion cooperating in a sliding seal with said semi-axis (7b) and defining a first chamber (33') and a second portion cooperating in a sliding seal with said portion of support (32) and defining a second chamber (33'') connectable to a source (51) of pressurized fluid of said vehicle (1).

4. Wheel hub according to claim 3, wherein said actuation system (30) includes elastic means (35) operationally interposed between said sleeve (31) and said support portion (32) and housed in said second chamber (33' '), said elastic means (35) being configured to exert a force directed at pushing said partition (31') towards said axle (7b).

5. Wheel hub according to claim 4, wherein said elastic means (35) comprise a spiral spring.

6. Wheel hub according to claim 4 or 5, wherein said elastic means (35) are partly housed in said support portion (32) .

7. Wheel hub according to one of claims 3 to 6, in which said support portion (32) defines a third chamber (34) fluidly connected to said first chamber (33').

8. Wheel hub according to claim 7, wherein said axle (7b) defines a protuberance (7b') housed in a sliding seal within said third chamber (34), said protuberance (7b') defining a duct connecting said first and third chamber (33', 34) .

9. Wheel hub according to claim 7 or 8, further comprising elastic means (36) housed in said third chamber (34) and configured to exert a force against said protuberance (7b').

10. Wheel hub according to claim 9, wherein said elastic means (36) comprise a helical spring placed between a protuberance (7b') and said support portion (32).

11. Axle (4) for vehicle including:
- a housing (5) defining a space (6) along an axis (B);
- a pair of axle shafts (7a, 7b) housed at least partially in said space (6) and including respective internal ends (7b'') cooperating with a transmission (8) of said vehicle (1) configured to provide a driving torque to said drive axles (7a, 7b);
- respective wheel hubs (10) according to one of the previous claims and carried in a rotationally free manner by said casing (5).

12. Vehicle (1) comprising a chassis (2), a powertrain (9), a transmission (8) and at least one axle (4) according to claim 10.

13. Vehicle according to claim 12, comprising a source of pressurized fluid (51) fluidly connected via at least one duct (51', 51'') to said actuation system (30) and valve means (52) fluidly interposed on said at least one duct (51', 51") to regulate the passage of fluid under pressure.

14. Vehicle according to claim 13, comprising a control unit (50) and a plurality of sensor means (53-60) configured to detect physical quantities relating to operational conditions of said vehicle (1), said control unit (50 ) comprising processing means electrically connected to said sensor means (53-60) to acquire the data detected by them, process them and consequently control said valve means (52) based on data relating to said operational conditions stored in said processing means.

15. Vehicle according to claim 14, comprising control means configured to vary the data stored in said electronic unit (50) relating to said operating quantities.

16. Vehicle according to claim 14 or 15, comprising at least some of the following sensor means (53-60):
• A load sensor (53) configured to detect the load of a suspension connecting said axle (4) to said frame;
• A clutch sensor (54) configured to detect the opening of a control clutch of said transmission (8);
• An accelerator sensor (55) configured to detect the acceleration of said vehicle (1);
• An ignition sensor (56) configured to detect the ignition of said vehicle (1);
• A speed sensor (57) configured to detect a rotation speed of an output shaft of said powertrain (9);
• control sensor (58) configured to detect the activation of the possibility of varying the ratio of said wheel hub (10)
• A speed sensor (59) configured to detect the speed of said drive axles (7a, 7b); And
• A speed sensor (60), configured to detect a speed of said wheel hub (10).

17. Method for checking a wheel hub (10) in a vehicle according to claim 16, comprising the following steps:
• Detect a plurality of physical quantities relating to the operating parameters of said vehicle (1);
• Process these physical quantities detected to identify a vehicle load condition;
• Check whether the vehicle load condition complies with the reduction ratio of said wheel hub (10);
• If it complies, said ratio is maintained, otherwise said actuation system (30) is controlled to switch to a different reduction ratio.

18. Method according to claim 17, wherein said control of said actuation system (30) comprises sending a signal to control said valve means (52).
